# EUROPÄISCHE PATENTSCHRIFT

(11) **EP 0 980 993 B1**
(45) Veröffentlichungstag und Bekanntmachung des Hinweises auf die Patenterteilung: **17.09.2008**
(21) Anmeldenummer: 99114310.8
(22) Anmeldetag: 21.07.1999
(51) Int. Cl.: F16H 15/42

(54) **Kegelreibringgetriebe**
Transmission with cones and friction ring
Transmission avec éléments coniques et anneau de friction

(30) Priorität: 18.08.1998 DE 19837368
(43) Veröffentlichungstag der Anmeldung: 23.02.2000
(73) Patentinhaber: Rohs, Ulrich, Dr., 52351 Düren (DE)
(72) Erfinder: Rohs, Ulrich, Dr., 52351 Düren (DE)
(74) Vertreter: Reuther, Martin

(56) Entgegenhaltungen:
- EP-A- 0 878 641
- DE-A- 19 542 726
- DE-B- 2 730 847
- DE-C- 513 390
- FR-A- 1 144 582
- US-A- 1 362 655
- US-A- 1 637 664
- US-A- 2 205 031

## Beschreibung

Die Erfindung betrifft ein Kegelreibringgetriebe mit zumindest zwei entgegengesetzt zueinander, auf parallelen Achsen angeordneten Kegelreibrädern und einer die beiden Kegelreibräder wirkverbindenden Reibeinrichtung. Darüber hinaus wird ein Verfahren zur Regelung des Übersetzungsverhältnisses bei einem Kegelgetriebe offenbart.

Derartige Kegelreibringgetriebe sind beispielsweise aus der DE 513 390 C, welche den nächstliegenden Stand der Technik bildet, aus der DE 195 42 726 A1 und aus der EP 0 657 663 A1 bekannt. Es zeigt sich, daß bei diesen Kegelreibringgetrieben ein ruhiger Lauf nicht gewährleistet werden kann.
Vielmehr neigen diese Getriebe dazu, insbesondere im Zusammenhang mit Verbrennungsmotoren unkontrollierte und unkontrollierbare Schwingungen aufzubauen.

Es ist Aufgabe vorliegender Erfindung, ein gattungsgemäßes Kegelreibringgetriebe bereitzustellen, bei welchem die Gefahr eines Auftretens unkontrollierbarer Schwingungen reduziert ist.

Als Lösung wird ein Kegelreibringgetriebe mit den Merkmalen des Hauptanspruches vorgeschlagen.

Hierbei umfasst das Kegelreibringgetriebe zumindest zwei entgegengesetzt auf parallelen Achsen angeordnete Kegelreibrädern und eine die beiden Kegelreibräder wirkverbindende Reibeinrichtung, bei welcher auf die Reibeinrichtung ein Drehmoment mit einer Komponente, die senkrecht auf einer durch beide Kegelreibachsen gelegten Ebene steht, wirkt. Die Reibeinrichtung ist mittels einer Führung entlang der Kegelreibräder verlagerbar und ist derart ausgestaltet, daß sie mit einem Drehmoment gegen die Führung gedrückt wird.

Durch eine derartige Anordnung läßt sich die Gefahr eines "Flatterns der Reibeinrichtung minimieren bzw. auf "Null" reduzieren, da die Reibeinrichtung einer Verspannung unterliegt. Auf diese Weise spielt ein immer vorhandenes Führungsspiel keine Rolle, da sich die Reibeinrichtung an einer Seite der Führung anlegt und durch das Drehmoment in dieser anliegenden Position gehalten wird.

Vorteilhafterweise wird das Drehmoment durch von den Kegelreibräder auf die Reibeinrichtung aufgebrachte Kräfte bedingt. Auf diese Weise wird die Reibeinrichtung proportional zur auf die Reibeinrichtung wirkenden Kraft an die Führung angelegt.

Eine derartige Ausgestaltung eignet sich insbesondere für Kegelreibringgetriebe, bei denen die Reibeinrichtung zwischen den Kegelreibrädern angeordnet ist. Hierdurch wird einerseits ermöglicht, daß ein ausreichendes Spiel für die Führung der Reibeinrichtung gewährleistet ist und trotzdem die Reibeinrichtung stabilisiert wird. Andererseits ermöglicht diese Einrichtung nach wie vor, daß die Reibeinrichtung durch Verlagerung um eine Drehachse entlang der beiden Kegelreibräder geführt wird.

Eine konkrete Ausgestaltung läßt sich dadurch realisieren, daß die Reibeinrichtung zwischen den Kegelreibrädern angeordnet ist und einen ersten Laufbereich, der an einem ersten der beiden Kegelreibräder wälzt, und einen zweiten Laufbereich, der an dem zweiten der beiden Kegelreibräder wälzt, aufweist, wobei die beiden Laufbereiche im Bezug auf eine Rotationsebene der Reibeinrichtung versetzt angeordnet sind. Hierbei wird unter dem Begriff eines Laufbereichs jedes geometrische Gebiet der Reibeinrichtung verstanden, welches an einem Kegelreibrad wälzt. Es versteht sich, daß die Laufbereiche während des Betriebes des Kegelreibringgetriebes einer leichten Veränderung unterliegen können. Unter dem Begriff einer Rotationsebene wird erfindungsgemäß eine Ebene verstanden, die senkrecht auf einer Rotationsachse der Reibeinrichtung angeordnet ist. Hierbei bestimmt der Begriff einer versetzten Anordnung, daß die beiden Laufbereiche von einer derartigen Rotationsebene unterschiedlich beabstandet sind.

Durch eine derartige versetzte Anordnung der beiden Laufbereiche in Bezug auf eine Rotationsebene wird auf die Reibeinrichtung durch die an den Laufbereichen anliegenden Kegelreibräder ein Drehmoment aufgebracht. Die Führung braucht dann nur noch derart ausgestaltet zu sein, daß dieses Drehmoment die Reibeinrichtung gegen die Führung drückt.

In einer verhältnismäßig unkompliziert aufgebauten Anordnung kann die Reibeinrichtung einen Reibring umfassen, der zumindest eine radial außen angeordnete Lauffläche und eine radial innen angeordnete Lauffläche umfaßt, wobei jede der Laufflächen jeweils an einem Kegelreibrad wälzt. Werden die beiden Laufflächen hinsichtlich einer Ringebene versetzt angeordnet, so folgt ein erfindungsgemäßes Drehmoment.

Die Reibeinrichtung kann in einer Führung geführt sein, die ein Gleitlager zwischen Reibeinrichtung und Führung umfaßt. Durch eine derartige Anordnung läßt sich überraschender Weise ein ruhiger Lauf des Reibringes gewährleisten, obwohl bei den gattungsgemäßen Anordnungen nur wenig oder überhaupt kein Schmiermittel für eine Führung der Reibeinrichtung zur Verfügung steht. Zwar kann eine derartige, ein Gleitlager umfassende Führung auch unabhängig von den übrigen Merkmalen des Kegelreibringgetriebes vorteilhaft den Lauf der Reibeinrichtung beruhigen. Die Vorteile dieser Führung kumulieren jedoch mit einem gegen die Führung gedrückten Drehmoment zu einem besonders gleichmäßigen Lauf der Reibeinrichtung.

Da die Reibeinrichtung durch die Kegelreibräder in der Regel fixiert ist, sollte es ausreichen, die Reibeinrichtung nur über zwei Führungsstellen zu führen. Überraschenderweise hat sich jedoch herausgestellt, daß bei einer Führung mittels drei Führungsstellen, sei an dieser Stelle ein Wälz- oder ein Gleitlager vorgesehen, sich eine Neigung zum Flattern wesentlich reduzieren läßt. Dieses ist insbesondere dann der Fall, wenn es sich bei der Reibeinrichtung um einen Reibring handelt, der zwischen den Kegelreibrädern angeordnet ist. Dieser Reibring kann sich nur um seine Hochachse drehen, so daß eine Führung mittels einer oder maximal zwei Führungsstellen ausreichen sollte. Eine Neigung des Ringes zum Flattern läßt sich hierdurch alleine jedoch nicht reduzieren, dieses ist erst bei drei Führungsstellen der Fall. Hierbei erfolgt eine Reduktion dieser Neigung zum Flattern bereits unabhängig von den übrigen Merkmalen des Kegelreibringgetriebes, wobei sich die Flatterneigung durch ein gegen die Führung wirkendes Drehmoment noch weiter reduzieren läßt.

Die Reibeinrichtung ist mittels eines entlang wenigstens einer Führungsstange verlagerbaren Schlittens geführt, wobei der Schlitten durch eine Kugelgradführung an der Führungsstange geführt ist. Hierbei kann als Kugelgradführung jede Wälzführung dienen, bei welcher eine axiale Führung mittels umlaufender Kugeln erfolgt. Insbesondere kann eine Kugelbüchse Verwendung finden. Durch eine derartige Lagerung des Schlittens, der im Stand der Technik mittels eines Gleitlagers entlang der Führungsstange geführt ist, läßt sich die Reibeinrichtung und insbesondere ein als Reibeinrichtung dienender Reibring noch stabiler führen. Eine derartige Anordnung eignet sich besonders für Kegelreibringgetriebe, bei welchen der Reibring durch Verlagerung um eine Drehachse, insbesondere durch Verlagerung von Führungsstangen, die einen den Reibring führenden Schlitten halten, erfolgt. Bei einer derartigen Halterung rühren die Kräfte zur Verlagerung des Reibringes bzw. der Reibeinrichtung von den Kegelreibrädern her, der Schlitten an sich ist nicht eigens angetrieben. Bei einer derartigen Anordnung kann auf diese Weise ein besonders ruhiger und gleichmäßiger Lauf der Reibeinrichtung gewährleistet werden, insbesondere wenn diese entlang der Kegelreibräder verlagert wird. Eine derartige Anordnung dient auch unabhängig von den übrigen Merkmalen des Kegelreibringgetriebes einer Stabilisierung der Reibeinrichtungsführung.

Um diese Führung noch weiter zu stabilisieren, kann zumindest eine Führungsstange profiliert sein. Eine derartige Maßnahme wirkt sich zwar nicht unmittelbar auf die Führung der Reibeinrichtung aus, es hat sich jedoch gezeigt, daß diese Maßnahme eine Schwingungsgefahr bei der Gesamtanordnung und somit auch die Gefahr eines Flatterns des Reibringes reduziert. Vorzugsweise kann die Führungsstange I-förmig oder quadratisch im Profil ausgebildet sein. Es versteht sich, daß eine derartige Profilierung auch unabhängig von einer Kugelgradführung des Schlittens an der Führungsstange vorteilhaft einer Stabilisierung der Gesamtanordnung dient.

Die Führungsstange kann an einen Stellrahmen aus Blech, Druckgußaluminium oder Kunststoff, insbesondere Hochleistungskunststoff, befestigt sein. Durch eine derartige Anordnung wird eine Gewichtsreduktion ermöglicht. Darüber hinaus folgt eine erhebliche Vereinfachung der Herstellung, da ein aus diesen Materialien bestehendes Teil lediglich entsprechend verformt bzw. ausgeformt werden braucht. Zwar ist die Verwendung eines derartigen Stellrahmens auch für sich gesehen vorteilhaft, um eine entsprechende Reduktion in Gewicht- und Herstellungskosten zu erreichen. Besonders im Zusammenhang mit der zuvor beschriebenen Kugelgradführung bzw. einer profilierten Führungsstange erweist sich ein derartiger Stellrahmen als vorteilhaft, da bei einer derartigen Anordnung der Schlitten selbst eine Stabilisierung der Führungsstangen ermöglicht, so daß die Führung der Gesamtanordnung trotz des Stellrahmens aus Blech ausreichend stabil ist.

Der Stellrahmen kann durch einen Linearmotor oder durch einen Rotationsmotor angesteuert werden. Hierbei ermöglicht insbesondere die stabile Führung der Reibeinrichtung sowie die Tatsache, daß die Reibeinrichtung lediglich um eine Drehachse gedreht werden muß, damit sie sich entlang der Kegelreibräder verlagert, einen Motor mit verhältnismäßig geringer Leistung zu verwenden. Dieses trifft insbesondere für Linearmotoren sowie für preisgünstige Rotationsmotoren zu. Eine derartige Anordnung ermöglicht es, auf krafthydraulische Verstellmechanismen zu verzichten, wodurch ein derartiges Kegelreibringgetriebe auch unabhängig von seinen übrigen Merkmalen kostengünstiger baut.

Unerwünschte Schwingungen bei einem gattungsgemäßen Kegelreibringgetriebe lassen sich auch dadurch vermeiden, daß zumindest eines der beiden Kegelreibräder auf einer Welle angeordnet ist, die über einen durchgehenden Kontaktbereich mit dem Kegelreibrad in Kontakt steht.

Der durchgehende Kontaktbereich gewährleistet eine stabile Lagerung des Kegelreibrades auf der Welle, so daß die Gefahr unerwünschter Schwingungen durch eine unzureichende Abstützung des Kegelreibrades auf der Welle reduziert wird. Eine derartige Anordnung ermöglicht es insbesondere, für das Kegelreibrad ein kostengünstigeres und weniger stabiles Material zu verwenden, ohne daß eine erhebliche Verminderung der Laufqualitäten und somit die Gefahr von Schwingungen auftritt.

Bei besonders kleinen, gattungsgemäßen Kegelreibringgetrieben können beide Kegelreibräder einstückig mit diesen ausgebildete Wellen- bzw. Lagerzapfen aufweisen. Dieses gewährleistet ebenso eine stabile Lagerung der Kegelreibräder, so daß unerwünschte Schwingungen vermieden werden können.

Bei derartigen Anordnungen läßt sich die Stabilität darüber hinausgehend dadurch erhöhen, daß das Kegelreibrad massiv ausgebildet ist.

Desweiteren ermöglichen die vorbeschriebenen Anordnungen, daß durch die Kegelreibräder eine ausreichend hohe Kraft auf die Reibeinrichtung aufgebracht werden kann, um eine ausreichende Leistungsübertragung zu gewährleisten.

Es ist insbesondere auch möglich, eines der Kegelreibräder aus Stahl zu bilden. Dieses gewährleistet einerseits eine günstige Eigenelastizität des Kegelreibrades, wenn es mit der Reibeinrichtung wechselwirkt. Andererseits ist Stahl verhältnismäßig kostengünstig. Die notwendige Stabilität kann durch die vorbeschriebenen Ausgestaltungsvariationen gewährleistet werden. Es versteht sich jedoch andererseits, daß ein Kegelreibrad aus Stahl auch unabhängig von den übrigen Merkmalen des Kegelreibringgetriebes vorteilhaft ist.

Im Gegensatz hierzu kann die Reibeinrichtung eine keramische Oberfläche aufweisen. Hierdurch können in kostengünstiger Weise vorteilhafte Reibeigenschaften zwischen den Kegelreibrädern und der Reibeinrichtung gewährleistet werden. Insbesondere kann die Reibeinrichtung einen Reibring aus Keramik umfassen.

Insbesondere im Zusammenhang mit der vorbeschriebenen Anordnung kann ein Traktionsfluid vorgesehen sein, welches im Wesentlichen für die Reibung zwischen Reibeinrichtung und Kegelreibrädern verantwortlich ist. Das heißt, das Traktionsfluid wird derart gewählt, daß die Reibung zwischen Reibeinrichtung und Kegelreibrädern bei Verwendung des Traktionsfluid wesentlich größer ist als ohne. Insbesondere kann das Traktionsfluid Diamantpulver oder andere Feststoffpartikel umfassen. Die Verwendung eines derartigen Traktionsfluides ist auch unabhängig von den übrigen Merkmalen des Kegelreibringgetriebes vorteilhaft.

Insbesondere im Zusammenhang mit der Verwendung eines Traktionsfluides können die Lager der Kegelreibräder gegen einen die Kegelreibräder umgebenden Raum abgedichtet sein. Hierdurch wird vermieden, daß die Lager mit dem Traktionsfluid in Kontakt kommen und hierdurch in ihren Laufeigenschaften beeinträchtigt werden. Eine derartige Anordnung ermöglicht erstmals die Verwendung eines Traktionsfluides, welches frei in dem die Kegelreibräder umgebenden Raum umherspritzen kann. Insofern ist es durch eine derartige Anordnung erstmals möglich, im unteren Bereich des die Kegelreibräder umgebenden Raumes einen Traktionsfluidsumpf vorzusehen und ein Verteilen des Traktionsfluides durch die Drehbewegung des unteren, in den Traktionsfluidsumpf tauchenden Kegelreibrades zu gewährleisten. Die bekannten Anordnungen ließen die Verwendung eines derartigen, sich fein verteilenden Traktionsfluides nicht zu.

Darüber hinaus ermöglicht die Abdichtung der Kegelreibradlager gegen den die Kegelreibräder umgebenden Raum, das mehrere Lager einer gemeinsamen Schmierung unterzogen werden.

Insofern können die an einer Seite des Kegelreibradraumes vorgesehenen Lager in miteinander verbundenen Lagerräumen angeordnet sein. Die gemeinsame Schmierung erfolgt dann durch die Verbindung dieser Lagerräume. Hierbei versteht es sich, daß diese Lagerräume auch Bestandteil eines größeren, neben dem Kegelreibradraum vorgesehenen Raumes sein können.

Ebenso können zumindest zwei an verschiedenen Seiten des Kegelreibradraumes vorgesehene Lager in miteinander verbundenen Lagerräumen angeordnet sein. Dieses kann durch entsprechende Schmiermittelleitungen geschehen.

Insgesamt ist es auf diese Weise möglich, ein Schmiermittelkreislauf für sämtliche, die Kegelreibräder lagernde Lager vorzusehen. Diese Anordnung ermöglicht es insbesondere, im Gegensatz zu den bekannten Kegelreibringgetrieben, ein eigens für die Lager ausgewähltes Schmiermittel zu verwenden, welches unabhängig von dem in dem Kegelreibradraum zum Einsatz kommenden Fluid ausgewählt werden kann.

Es versteht sich, daß eine derartige Ausgestaltung der Lagerräume auch unabhängig von der Verwendung eines Traktionsfluides bzw. unabhängig von den übrigen Merkmalen des Kegelreibringgetriebes vorteilhaft ist.

Die vorbeschriebene Anordnung mit gemeinsamen Lagerräumen erweist sich als besonders vorteilhaft, wenn das Kegelreibringgetriebe wenigstens ein Kegelrollenlager aufweist. Bekanntermaßen erzeugen Kegelrollenlager zum Kegelstumpf hin einen Überdruck, der so groß ist, daß an dieser Seite eine Abdichtung des Kegelrollenlagers nicht vorgesehen werden kann, weil eine derartige Dichtung durch den dort erzeugten Druck aufgesprengt wird.

Sieht man jedoch zwischen dieser Abdichtung und dem Kegelrollenlager einen Auffangraum vor, von welchem wenigstens eine Schmiermittelförderleitung zu einem anderen Lager ausgeht, kann dieser Druck einem Fördern des Schmiermittels dienen.

Auf diese Weise kann ein Schmiermittelkreislauf realisiert werden, der ohne eine zusätzliche Schmiermittelpumpe oder ähnliches auskommt.

Zur Kegelspitze des Kegelrollenlagers hin kann darüber hinaus ein Schmiermittelsumpf vorgesehen sein, aus welchem das Kegelrollenlager Schmiermittel fördert. Dieser Schmiermittelsumpf kann mit einer entsprechenden Rückführleitung von einem anderen Lager verbunden sein.

Die Verwendung eines Kegelrollenlagers zur Schmiermittelförderung, insbesondere zu anderen Lagern einer mechanischen Anordnung ist auch unabhängig von sämtlichen vorgenannten Merkmalen vorteilhaft anwendbar. Hierdurch wird insbesondere eine besonders zuverlässige Schmiermittelförderung gewährleistet, die baulich sehr einfach zu realisieren ist.

Wenigstens ein Kegelreibrad kann ein Pendelrollenlager aufweisen. Hierdurch läßt sich die Laufruhe sowie das durch das Kegelreibringgetriebe übertragene Drehmoment erhöhen, da eine derartige Lagerung es ermöglicht, die beiden Kegelreibräder sowie die Reibeinrichtung bis zu einem Durchbiegen der Kegelreibräder bzw. der die Kegelreibräder lagernden Wellen zu belasten. Selbst unter einer derartig hohen Last kann ein sicherer und ruhiger Lauf des Kegelreibringgetriebes gewährleistet werden.

Darüber hinaus kann wenigstens ein Kegelreibrad mittels eines axial wirksamen Lagers gelagert sein, welches in radialer Richtung bewegbar angeordnet ist. Durch ein derartiges Lager können sehr hohe Axialkräfte aufgenommen werden, wobei durch die Bewegbarkeit in radialer Richtung das Lager einer Wellendurchbiegung folgen kann. Als ein derartiges Lager kommen Axial-Schrägkugellager, Axial-Zylinderrollenlager, AxialKugellager, Axial-Nadellager aber auch Kugelrillenlager und Schrägkugellager in Frage, die mit einem entsprechenden radialen Spiel montiert werden. Ebenso kann hierfür ein Kegelrollenlager der oben beschriebenen Art Verwendung finden.

Es ist insbesondere auch möglich, dieses axial wirksame Lager auf derselben Seite des Kegelreibrades wie ein Pendelrollenlager vorzusehen. So können die Lageraufgaben entsprechend auf beide Lager verteilt werden.

Es hat sich gezeigt, dass es vorteilhaft ist, wenn die Reibeinrichtung ein Drehmoment mit einer Komponente, die senkrecht auf einer durch beide Kegelreibachsen gelegten Ebene steht, wirkt. Die Reibeinrichtung kann mittels einer Führung entlag der Kegelreibräder verlagerbar und derart ausgestaltet sein, dass sie mit einem Drehmoment gegen die Führung gedrückt wird. Es versteht sich, dass die diesbezüglichen Merkmale auch ohne die übrigen Merkmale der Erfindung vorteilhaft sind und dem entsprechend die Aufgabe der Erfindung lösen.

Desweiteren wird ein Verfahren zur Regelung des Übersetzungsverhältnisses bei einem Kegelgetriebe offenbart, bei welchem das Übersetzungsverhältnis in Abhängigkeit von einer Relativposition eines umlaufenden Reibelementes eingestellt werden und das Reibelement durch verändern einer Drehlage bezüglich einer Achse in seiner Relativposition verändert werden kann, bereit, wobei diese Drehlage des Reibelementes als Stellglied für die Regelung genutzt wird. Hierdurch kann eine sehr exakte und laufruhige Regelung des Übersetzungsverhältnisses gewährleistet werden.

Die Drehlage des Reibelementes kann beispielsweise durch Verdrehen des oben beschriebenen Rahmens bzw. der oben beschriebenen Führungsstangen verändert werden. Hierzu kann, wie ebenfalls oben beschrieben, ein Motor Verwendung finden.

Um die Regelgenauigkeit zu erhöhen, kann die Drehlage des Reibelementes ermittelt und zur Regelung genutzt werden. Dieses geschieht vorzugsweise durch Verwendung der ermittelten Drehlage als Kontrollgröße, so daß diese ermittelte Drehlage nur mittelbar zur Regelung genutzt wird.

Ebenso kann die Relativposition des Reibelementes in Bezug auf die Kegel ermittelt und zur Regelung genutzt werden. Dieses geschieht ebenfalls vorzugsweise als Kontrollgröße. Die ermittelte Relativposition des Reibelementes kann aber auch, insbesondere bei schnellen Verstellvorgängen unmittelbar zur Regelung genutzt werden.

Durch die vorbeschriebenen Regelungsverfahren kann ein besonders ruhiger Lauf des Kegelgetriebes gewährleistet werden. Ein derartig gestalteter Regelkreis läßt sich in seinem Schwingungsverhalten verhältnismäßig gut beherrschen.

Als Regelgröße kann ein Drehzahlverhältnis zwischen einer eingangsseitigen Welle und einer ausgangsseitigen Welle des Kegelgetriebes geregelt werden. Eine derartige Regelgröße ist verhältnismäßig einfach zu ermitteln; dieses kann durch zwei entsprechend angeordnete Drehzahlmesser geschehen.

Die vorbeschriebenen Verfahren und Anordnungen eignen sich alle, die Laufruhe eines Kegelgetriebes bzw. eines Kegelreibringgetriebe zu verbessern. Hierbei können die vorbeschriebenen Merkmale zwar einzeln bzw. unabhängig voneinander die Laufruhe verbessern. Die Kombination einzelner Merkmale liefert jedoch überraschend hohe Verbesserungen bei derartigen Getrieben, die bei einer bloßen Merkmalsaddition nicht zu erwarten wären.

Weitere Vorteile, Ziele und Eigenschaften vorliegender Erfindung werden durch nachfolgend anhand anliegender Zeichnung erläuterte Ausführungsbeispiele verdeutlicht. In der Zeichnung zeigen:
- Figur 1: ein Kegelreibringgetriebe im Schnitt;
- Figur 2: das Kegelreibringgetriebe nach Figur 1 entlang der Linie II-II in Figur 1;
- Figur 3: das Kegelreibringgetriebe nach Figur 1 entlang der Linie III-III in Figur 1;
- Figur 4: eine Seitenansicht eines Führungsschlittens sowie eines in diesem Führungsschlitten geführten Reibringes für das Kegelreibringgetriebe nach Figur 1;
- Figur 5: einen Schnitt durch den Reibring und seinen Führungsschlitten nach Figur 4 entlang der Linie V-V in Figur 4;
- Figur 6: einen Schnitt durch den Reibring und seinen Führungsschlitten nach Figur 4 entlang der Linie VI-VI in Figur 4;
- Figur 7: einen Schnitt durch einen Stellrahmen des Kegelreibringgetriebes nach Figur 1 entlang der Linie VII-VII in Figur 1;
- Figur 8: eine schematische Schnittansicht des zwischen zwei Kegelreibrädern angeordneten Reibringes des Kegelreibringgetriebes nach Figur 1; und
- Figur 9: einen Schnitt durch ein weiteres Kegelreibringgetriebe in ähnlicher Darstellung wie Figur 1.

Bei den in der Zeichnung dargestellten Kegelreibringgetrieben sind in einem Gehäuse 1 zwei Kegelreibräder 2, 3 entgegengesetzt zueinander auf parallelen Achsen angeordnet. Die beiden Kegelreibräder 2, 3 sind durch einen als Reibeinrichtung dienenden Reibring 4 wirkverbunden. Dieser Reibring 4 läuft zwischen den beiden Kegelreibräder 2, 3 um und steht mit den Mantelflächen dieser beiden Kegelreibräder 2, 3 in Kontakt.

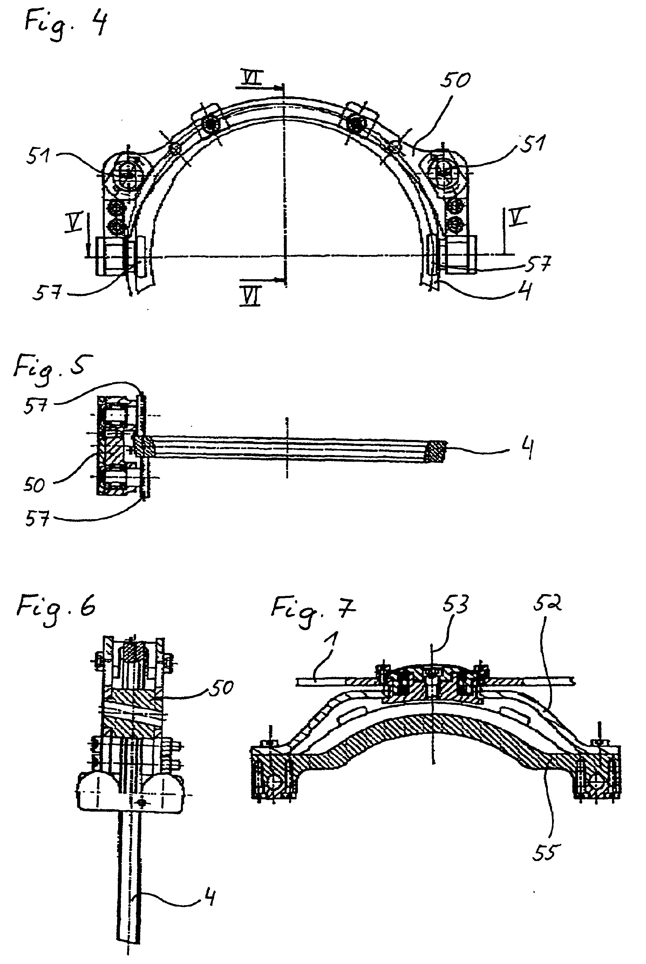

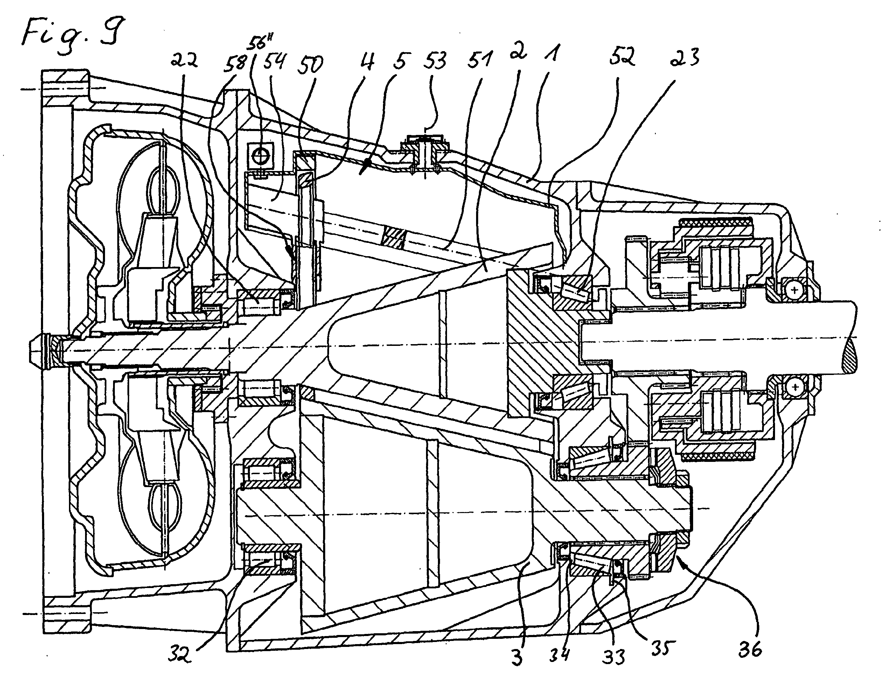

Der Reibring 4 ist in einer Führung 5 gelagert und mittels dieser Führung 5 verlagerbar. Diese Führung 5 umfaßt einen Schlitten 50, der an zwei Führungsstangen 51 geführt ist. Während, wie aus Figur 6 ersichtlich, der Schlitten 50 des ersten Kegelreibringgetriebes in einer Gleitführung an den Führungsstangen 51 geführt ist, erfolgt diese Führung bei dem in Figur 9 dargestellten Ausführungsbeispiel durch eine Kugelbuchse 54. Die Führungsstange des in Figur 9 dargestellten Kegelreibringgetriebes ist quadratisch profiliert.

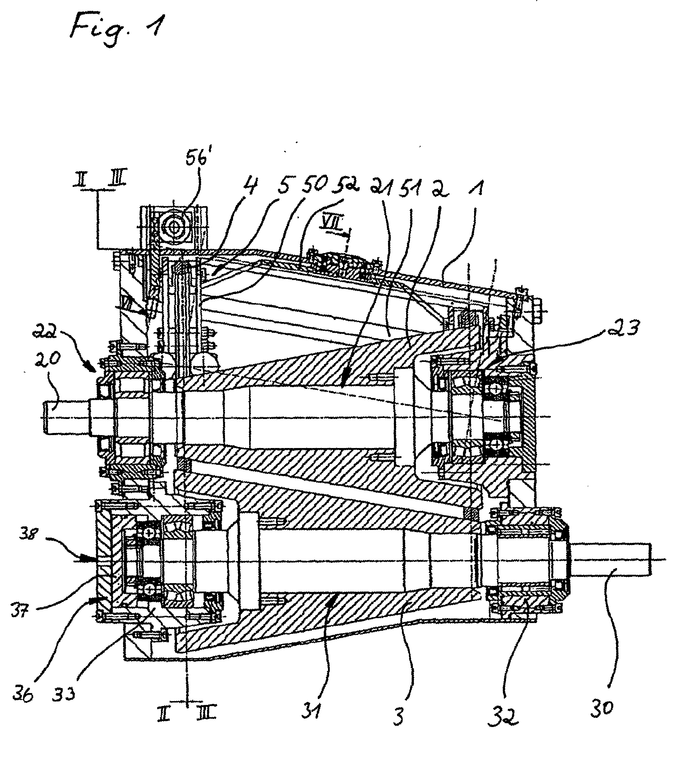

Die beiden Führungsstangen 51 beider Kegelreibringgetriebe sind an einem Stellrahmen 52 befestigt. Während der Stellrahmen 52 des in Figur 9 dargestellten Kegelreibringgetriebes unmittelbar mit den Führungsstangen 51 verbunden ist, erfolgt diese Verbindung bei dem in Figuren 1 bis 7 dargestellten Kegelreibringgetriebe mittelbar über einen stabilisierenden Verbindungsbügel 55 (siehe Figur 7).

Der Stellrahmen ist um eine Drehachse 53 verlagerbar an dem Gehäuse 1 befestigt. Die Verlagerung erfolgt bei dem in Figuren 1 bis 7 dargestellten Kegelreibringgetriebe mittels eines Rotationsmotors 56', während der Stellrahmen 52 bei dem in Figur 9 dargestellten Kegelreibringgetriebe mittels eines Linearmotors 56" angesteuert wird.

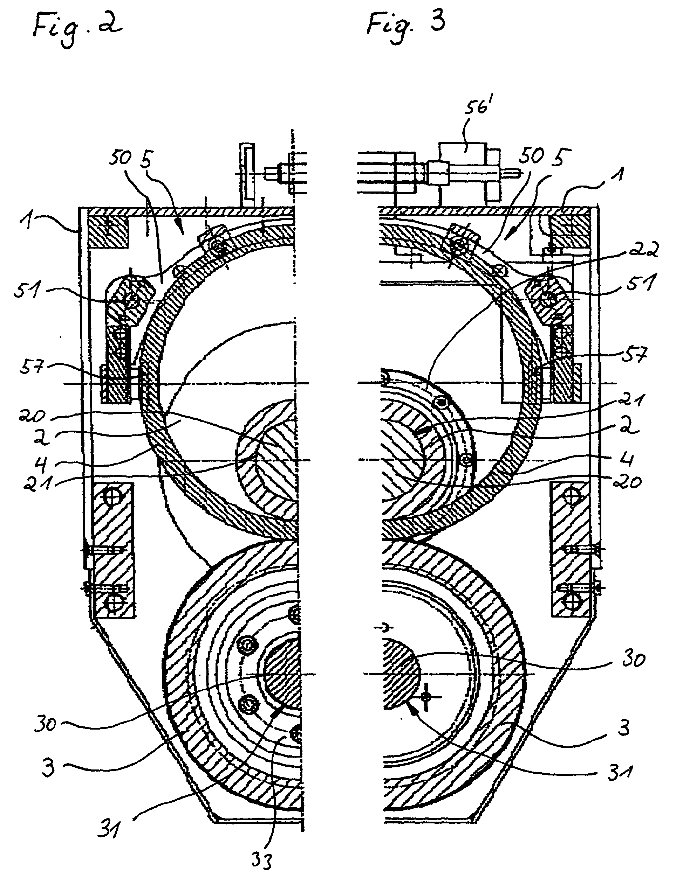

Bei dem in Figuren 1 bis 7 dargestellten Kegelreibringgetriebe erfolgt die Führung des Reibringes durch an zwei Führungsstellen vorgesehenen Rollenpaare 57 (siehe insbesondere Figuren 2 bis 5). Bei dem Kegelreibringgetriebe nach Figur 9 ist der Reibring 4 hingegen in einer Gleitführung 58 geführt. Wie unmittelbar ersichtlich, können statt der zwei Führungsstellen (siehe Figur 4 bzw. Figur 9) auch mehrere Führungsstellen vorgesehen sein.

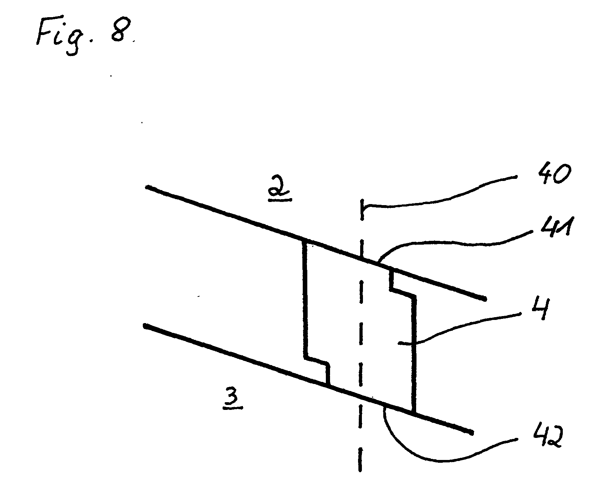

Die beiden Reibringe 4 der beiden dargestellten Kegelreibringgetriebe rotieren um eine Achse, die parallel zu den Achsen der Kegelreibräder 2, 3 ausgerichtet ist. Es ist möglich, die Achse auch in einem Winkel hierzu anzuordnen. Insbesondere kann die Achse auch parallel zu den Mantelflächen vorgesehen sein. Dementsprechend rotieren die Reibringe 4 in einer Rotationsebene, die auf dieser Rotationsachse senkrecht steht. In der Schemadarstellung nach Figur 8 ist eine derartige Rotationsebene beispielshaft als Rotationsebene 40 dargestellt. Ebenso steht diese Ebene 40 für eine Ringebene.

Wie aus Figur 8 ersichtlich, weißt der Reibring 4 zwei Laufbereiche bzw. Laufflächen 41, 42 auf, mit welchen er jeweils an einem der Kegelreibräder 2, 3 wälzt. Wie Figur 8 zeigt, sind die beiden Laufflächen 41, 42 hinsichtlich der Ebene 6 versetzt angeordnet. Durch eine derartige Anordnung wird durch die beiden Kegelreibräder 2, 3 ein Drehmoment auf den Reibring ausgeübt.

Bedingt durch seine Symmetrie kann der Reibring 4 im wesentlichen nur um seine Hochachse in seiner Lage verändert werden. Darüber hinaus ist ein leichtes Verkippen möglich.

Das auf den Reibring 4 wirkende Drehmoment ist derart gewählt, daß es den Reibring 4 gerade in die letzt genannte Richtung mit einer Kraft beaufschlagt. Hier durch wird der Reibring 4 gegen die Führung 5 gedrückt. Es ist andererseits auch denkbar, den Reibring 4 mit einem entgegen gesetzten Drehmoment zu belasten.

Das vorbeschriebene Drehmoment sowie eine ausreichende Reibkraft zwischen den Kegelreibräder 2, 3 und den Reibring 4 wird dadurch gewährleistet, daß die Kegelreibräder 2, 3 axial gegeneinander verspannt werden. Um dieser Verspannung zu begegnen, sind die beiden Kegelreibräder 2, 3 des in Figuren 1 bis 7 dargestellten Kegelreibringgetriebes jeweils auf einer Welle 20, 30 angeordnet, die über einen weitgehend durchgehenden Kontaktbereich 21, 31 jeweils mit dem Kegelreibräder 2, 3 in Kontakt stehen. Die beiden Kegelreibräder 2, 3 dieses Kegelreibringgetriebes sind ansonsten massiv ausgeführt.

Um die Stabilität der einen Hohlraum umfassenden Kegelreibräder 2, 3 des in Figur 9 dargestellten Kegelreibringgetriebes zu erhöhen, können diese einstückig mit diesen ausgebildete Wellen- bzw. Lagerzapfen aufweisen. Ebenso ist eine massive Ausbildung dieser Kegelreibräder 2, 3 möglich.

Die Kegelreibräder 2, 3 beider Kegelreibradgetriebe sind aus Stahl gebildet. Der Reibring 4 besteht aus einer Keramik. Im unteren Bereich des Gehäuses 1 ist ein Sumpf aus Traktionsfluid vorgesehen. Das Traktionsfluid kann mit Diamantpulver versetzt sein. Die Menge des Traktionsfluid ist derart bemessen, daß ein unterer Teil des Reibrades 3 in diesen Sumpf eintaucht und sich zwischen dem im Gehäuse 1 verteilten Traktionsfluid und dem im Sumpf befindlichen Traktionsfluid beim Betrieb des Kegelreibringgetriebes ein Gleichgewicht einstellt.

Die Kegelreibräder 2, 3 sind mittels Lager 22, 23 bzw. 32, 33 gelagert. Die Lager 22, 23 bzw. 32, 33 befinden sich jeweils in abgedichteten Lagerräumen, so daß insbesondere kein Traktionsfluid in diese Lagerräume bzw. an diese Lager 22, 23 und 32, 33 gelangt. Sämtliche Lagerräume sind durch eine Schmiermittelleitung miteinander verbunden, durch welche Lageröl zirkuliert. Bei dem in Figuren 1 bis 7 dargestellten Kegelreibringgetriebe wird diese Zirkulation durch eine Ölpumpe aufrecht erhalten, während dieses bei dem in Figur 9 dargestellten Kegelreibringgetriebe durch die Lager 23 und 33 erfolgt. Letztere Lager sind als Kegelrollenlager ausgebildet. Zur Kegelspitze des Kegelrollenlagers 33 ist ein Lagerölsumpf 34 vorgesehen, während sich auf der Kegelstumpfseite des Lagers 33 ein Auffangraum 35 befindet, in welchen das Lageröl von dem Kegelrollenlager 33 gepumpt wird. Von dem Auffangraum 35 gehen Lagerölleitungen zu den übrigen Lagern.

Sämtliche Lager 22, 23 und 32, 33 nehmen die auftretenden Radialkräfte auf. Hingegen dienen die Lager 23 und 33 auch der Aufnahme axialer Kräfte. Dieses wird bei dem Kegelreibringgetriebe nach Figur 9 durch die Kegelrollenlager 23 und 33, die entsprechend entgegengesetzt angeordnet sind, gewährleistet. Bei diesem Kegelreibringgetriebe sind die Lager 22 und 32 als Zylinderrollenlager ausgebildet.

Hingegen werden die axialen Kräfte bei den Lagern 23 und 33 des in Figuren 1 bis 7 dargestellten Kegelreibringgetriebes durch eine Kombinations aus Pendelrollenlager und Rillenkugellager kompensiert. Die Lager 23 und 33 sind hierzu auf verschiedenen Seiten des Kegelreibringgetriebes angeordnet. Hierbei dient das Pendelrollenlager der Aufnahme von Radial- und Axialkräften. Es eignet sich insbesondere, auch einer Durchbiegung der Wellen 20 bzw. 30 zu folgen. Das Rollenkugellager hingegen dient im Wesentlichen der Aufnahme axialer Kräfte und ist radial bewegbar in dem Gehäuse 1 angeordnet.

Um die notwendige Axialverspannung zu gewährleisten, weisen die beiden Kegelreibringgetriebe jeweils eine Verspanneinrichtung auf, durch welche das Kegelreibrad mit einer axial gerichteten, vom Kegelstumpf zur Kegelspitze hinweisenden Kraft beaufschlagt werden kann. Hierzu ist bei dem in Figur 9 dargestellt Kegelreibringgetriebe eine Tellerfederanordnung und eine Schrägnockenkupplung vorgesehen. Die Schrägnockenkupplung ermöglicht eine Drehmomentsanpassung, während die Tellerfederanordnung eine Grundlast bedingt. Die Schrägnockenkupplung umfaßt radial verlaufende Schrägen, die unter einem auf das Kegelreibrad 3 wirkenden Drehmoment aufeinander auflaufen und hierdurch die Anpreßkraft erhöhen. Bei dem in Figuren 1 bis 7 dargestellten Kegelreibringgetriebe sind hierfür hydraulische Mittel 36 vorgesehen. Hierbei handelt es sich um einen axial verschiebbaren Zylinder 37, welcher über eine Öffnung 38 hydraulisch angetrieben kann und auf das Rillenkugellager des Lagers 33 wirkt.

Die Regelung des Übersetzungsverhältnisses beider Kegelreibringgetriebe erfolgt dadurch, daß sowohl an der Antriebswelle 20 als auch an der Abtriebswelle 30 Drehzahlmesser vorgesehen sind. Als Regelgröße dient das Drehzahlverhältnis zwischen den beiden Wellen 20, 30. Das Drehzahlverhältnis wird über die Drehlage des Reibrings 4 geregelt. Diese Drehlage kann durch die Motoren 56' und 56" verändert werden. Weicht das Drehzahlverhältnis von dem gewünschten Drehzahlverhältnis ab, wird eine entsprechende Lageänderung durch die Motoren 56' bzw. 56" erzeugt. Daraufhin wandert der Reibring entlang der Mantelfläche der Kegelreibräder 2, 3. Ist das gewünschte Drehzahlverhältnis erreicht, so wird eine entsprechende Drehlageänderung des Reibringes 4 vorgenommen und dieser parallel zu den Kegelreibradachsen ausgerichtet.

Die Drehlage des Reibringes 4 wird durch die Position der Motoren 56' bzw. 56" ermittelt und als Kontrollgröße genutzt.

Desweiteren wird die Relativposition des Reibringes 4 ermittelt. Die gemessene Relativposition geht ebenfalls als Stellglied in den Regelkreis ein. Hierbei wird von der Relativposition nur im Falle einer verhältnismäßig raschen Verlagerung des Reibringes 4 Gebrauch gemacht.

## Patentansprüche

1. Kegelreibringgetriebe mit zumindest zwei entgegengesetzt zueinander auf parallelen Achsen angeordneten Kegelreibrädern (2, 3) und einer die beiden Kegelreibräder (2, 3) wirkverbindenden Reibeinrichtung (4), bei welchem auf die Reibeinrichtung (4) ein Drehmoment mit einer Komponente, die senkrecht auf einer durch die beiden Kegelreibradachsen gelegten Ebene steht, wirkt, ***dadurch gekennzeichnet, dass*** die Reibeinrichtung (4) mittels eines entlang wenigstens einer Führungsstange (51) verlagerbaren Schlittens (50) geführt ist, wobei der Schlitten (50) durch eine Kugelgradfuhrung (54) an der Führungsstange (51) geführt ist.

2. Kegelreibringgetriebe nach Anspruch 1, ***dadurch gekennzeichnet, dass*** das Drehmoment durch von den Kegelreibrädern (2, 3) auf die Reibeinrichtung (4) aufgebrachte Kräfte bedingt ist.

3. Kegelreibringgetriebe nach Anspruch 1 oder 2, ***dadurch gekennzeichnet, dass*** die Reibeinrichtung (4) zwischen den Kegelreibrädem (2, 3) angeordnet ist und einen ersten Laufbereich (41, 42), der an einem ersten der beiden Kegelreibräder (2, 3) wälzt, und einen zweiten Laufbereich (41, 42), der an dem zweiten der beiden Kegelreibräder (2, 3) wälzt, aufweist, wobei die beiden Laufbereiche (41, 42) in Bezug auf eine Rotationsebene (6) der Reibeinrichtung (4) versetzt angeordnet sind.

4. Kegelreibringgetriebe nach Anspruch 3**, *dadurch gekennzeichnet, dass*** die Reibeinrichtung (4) einen Reibring umfasst, der zumindest eine radial außen angeordnete Lauffläche (42) und eine radial innen angeordnete Lauffläche (41) umfasst, wobei die beiden Lauf flächen (41, 42) hinsichtlich einer Ringebene (6) versetzt angeordnet sind.

5. Kegelreibringgetriebe nach einem der Ansprüche 1 bis 4, ***dadurch gekennzeichnet dass*** die Reibeinrichtung (4) in einer Führung (5) geführt ist, die ein Gleitlager (48) zwischen der Reibeinrichtung (4) und der Führung (5) umfaßt.

6. Kegelreibringgetriebe nach einem der Ansprüche 1 bis 5, ***dadurch gekennzeichnet, dass*** die Reibeinrichtung (4) zumindest über drei Führungsstellen geführt ist.

7. Kegelreibringgetriebe nach einem der Ansprüche 1 bis 6, ***dadurch gekennzeichnet, dass*** die Führungsstange (51), vorzugsweise I-formig oder quadratisch, profiliert ist.

8. Kegelreibringgetriebe nach einem der Ansprüche 1 bis 7bis, ***dadurch gekennzeichnet, dass*** die Führungsstange (51) an einem Stellrahmen (52) aus Blech, Druckgußaluminium oder Kunststoff befestigt ist.

9. Kegelreibringgetriebe nach Anspruch 8, ***dadurch gekennzeichnet, dass*** der Stellrahmen (52) durch einen Linearmotor (56") angesteuert ist.

10. Kegelreibringgetriebe nach Anspruch 8, ***dadurch gekennzeichnet, dass*** der Stellrahmen (52) durch eine Rotationsmotor (56') angesteuert ist.

11. Kegelreibringgetriebe nach einem der Ansprüche 1 bis 10, ***dadurch gekennzeichnet, dass*** zumindest eines der beiden Kegelreibräder (2, 3) auf einer Welle (20, 30) angeordnet ist, die über einen weitgehend durchgehenden Kontaktbereich mit dem Kegelreibrad (2, 3) in Kontakt steht.

12. Kegelreibringgetriebe nach einem der Ansprüche 1 bis 11, ***dadurch gekennzeichnet, dass*** beide Kegelreibräder (2,3) einstückig mit diesen ausgebildete Lager- bzw. Wellenzapfen aufweisen.

13. Kegelreibringgetriebe nach Anspruch 1 bis 12, ***dadurch gekennzeichnet, dass*** das Kegelreibrad (2, 3) massiv ausgebildet ist.

14. Kegelreibringgetriebe nach einem der Ansprüche 1 bis 13, ***dadurch gekennzeichnet, dass*** zumindest ein Kegelreibrad (2, 3) aus Stahl gebildet ist.

15. Kegelreibringgetriebe nach einem der Ansprüche 1 bis 14, ***dadurch gekennzeichnet, dass*** die Reibeinrichtung (4) eine keramische Oberfläche aufweist.

16. Kegelreibringgetriebe nach Anspruch 15, ***dadurch gekennzeichnet, dass*** die Reibeinrichtung (4) einen Reibring aus einer Keramik umfasst.

17. Kegelreibringgetriebe nach einem der Ansprüche 1 bis 16, ***dadurch gekennzeichnet, dass*** in einem die Kegelreibräder (2, 3) umgebenden Raum ein Traktionsfluid mit Diamantpulver oder anderen Feststoffpartikeln vorgesehen ist.

18. Kegelreibringgetriebe nach einem der Ansprüche 1 bis 17, ***dadurch gekennzeichnet, dass*** Lager (22, 23, 32, 33) der Kegelreibräder (2, 3) gegen einen die Kegelreibräder (2, 3) umgebenden Raum abgedichtet sind.

19. Kegelreibringgetriebe nach Anspruch 18, ***dadurch gekennzeichnet, dass*** die an einer Seite des Kegelreibradraumes vorgesehenen Lager (22, 23, 32, 33) in miteinander verbundenen Lagerräumen angeordnet sind.

20. Kegelreibringgetriebe nach Anspruch 18 oder 19, ***dadurch gekennzeichnet, dass*** zwei an verschiedenen Seiten des Kegelreibradraumes vorgesehene Lager (22, 23, 32, 33) in miteinander verbundenen Lagerräumen angeordnet sind.

21. Kegelreibringgetriebe nach einem der Ansprüche 1 bis 20, ***gekennzeichnet durch*** wenigstens ein Kegelrollenlager.

22. Kegelreibringgetriebe nach Anspruch 21, ***dadurch gekennzeichnet dass*** das Kegelrollenlager zum Kegelstumpf hin abgedichtet und zwischen Abdichtung und Kegelrollen ein Auffangraum (35) vorgesehen ist, von welchen wenigsten eine Schmiermittelförderleitung ausgeht.

23. Kegelreibringgetriebe nach Anspruch 21 oder 22, ***dadurch gekennzeichnet, dass*** zur Kegelspitze des Kegelrollenlagers hin ein Schmiermittelsumpf (34) vorgesehen ist.

24. Kegelreibringgetriebe nach einem der Ansprüche 1 bis 23, ***dadurch gekennzeichnet, dass*** wenigstens ein Kegelreibrad (2, 3) ein Pendelrollenlager aufweist.

25. Kegelreibringgetriebe nach einem der Ansprüche 1 bis 24, ***dadurch gekennzeichnet, dass*** wenigstens ein Kegelreibrad (2, 3) ein axial wirksames Lager aufweist, welches in radialer Richtung bewegbar angeordnet ist und welches vorzugsweise auf einer Seite des Kegelreibrades (2, 3) mit einem Pendelrollenlager angeordnet ist.

26. Kegelreibringgetriebe nach einem der Ansprüche 1 bis 25, ***dadurch gekennzeichnet, dass*** hydraulische Mittel (36) vorgesehen sind, die zumindest ein Kegelreibrad (2, 3) mit einer axial gerichteten, vorzugsweise vom Kegelstumpf zur Kegelspitze hinweisenden, Kraft beaufschlagen können.

## Claims

1. Bevel friction ring transmission with at least two bevel friction wheels (2,3) arranged on two opposing parallel axes and a friction device (4) operationally connecting the two bevel friction wheels (2,3), at which a torque with a component which stands vertically on a plane placed through the two bevel friction wheel axes acts on the friction device (4), **characterized in that** the friction device (4) is guided by means of a slide (50) which can be relocated along at least one guide rod (51), wherein the slide (50) is guided on the guide rod (51) through a ball bearing guide (54).

2. The bevel friction ring transmission according to Claim 1, **characterized in that** the torque is due to the forces exerted by the bevel friction wheels (2,3) on the friction device (4).

3. The bevel friction ring transmission according to Claim 1 or 2, **characterized in that** the friction device (4) is arranged between the bevel friction wheels (2,3) and comprises a first running region (41, 42) which rolls on a first of the two bevel friction wheels (2,3) and a second running region (41,42) which rolls on the second of the two bevel friction wheels (2,3), wherein the two running regions (41,42) with respect to a rotating plane (6) of the friction device (4) are arranged in a offset manner.

4. The bevel friction ring transmission according to Claim 3, **characterized in that** the friction device (4) comprises a friction ring which comprises at least one running surface (42) arranged radially on the outside and a running surface (41) arranged radially on the inside, wherein the two running surfaces (41,42) with regard to a ring plane (6) are arranged in an offset manner.

5. The bevel friction ring transmission according to any one of the Claims 1 to 4, **characterized in that** the friction device (4) is guided in a guide (5) which comprises a slide bearing (48) between the friction device (4) and the guide (5).

6. The bevel friction ring transmission according to any one of the Claims 1 to 5, **characterized in that** the friction device (4) is guided via at least three guide points.

7. The bevel friction ring transmission according to any one of the Claims 1 to 6, **characterized in that** the guide rod (51) is preferentially profiled I-shaped or square.

8. The bevel friction ring transmission according to any one of the Claims 1 to 7, **characterized in that** the guide rod (51) is attached to an adjusting frame (52) of plate die cast aluminium or plastic.

9. The bevel friction ring transmission according to Claim 8, **characterized in that** the adjusting frame (52) is activated by a linear motor (56").

10. The bevel friction ring transmission according to Claim 8, **characterized in that** the adjusting frame (52) is activated by a rotating motor (56').

11. The bevel friction ring transmission according to any one of the Claims 1 to 10, **characterized in that** at least one of the two bevel friction wheels (2, 3) is arranged on a shaft (20,30) which over a substantially continuous contact region is in contact with the bevel friction wheel (2,3).

12. The bevel friction ring transmission according to any one of the Claims 1 to 11, **characterized in that** both bevel friction wheels (2,3) comprise bearing or shaft pins which are embodied as one piece with said bevel friction wheels.

13. The bevel friction ring transmission according to Claim 1 to 12, **characterized in that** the bevel friction wheel (2,3) is a solid embodiment.

14. The bevel friction ring transmission according to any one of the Claims 1 to 13, **characterized in that** at least one bevel friction wheel (2,3) is embodied of steel.

15. The bevel friction ring transmission according to any one of the Claims 1 to 14, **characterized in that** the friction device (4) comprises a ceramic surface.

16. The bevel friction ring transmission according to Claim 15, **characterized in that** the friction device (4) comprises a friction ring of a ceramic.

17. The bevel friction ring transmission according to any one of the Claims 1 to 16, **characterized in that** in a space surrounding the bevel friction wheels (2,3) a traction fluid with diamond powder or other solid particles is provided.

18. The bevel friction ring transmission according to any one of the Claims 1 to 17, **characterized in that** the bearing (22,23,32,33) of the bevel friction wheels (2,3) are sealed against a space surrounding the bevel friction wheels (2,3).

19. The bevel friction ring transmission according to Claim 18, **characterized in that** the bearings (22,23,32, 33) provided on a side of the bevel friction wheel space are arranged in bearing spaces connected with one another.

20. The bevel friction ring transmission according to Claim 18 or 19, **characterized in that** two bearings (22,23,32,33) provided on different sides of the bevel friction wheel space are arranged in bearing spaces connected with each other.

21. The bevel friction ring transmission according to any one of the Claims 1 to 20, **characterized by** at least one tapered roller bearing.

22. The bevel friction ring transmission according to Claim 21, **characterized in that** the tapered roller bearing is sealed towards the truncated cone and a collection space (35) is provided between seal and tapered rollers, from which at least one lubricant feed line originates.

23. The bevel friction ring transmission according to Claim 21 or 22, **characterized in that** towards the tip of the cone of the tapered roller bearing a lubricant sump (35) is provided.

24. The bevel friction ring transmission according to any one of the Claims 1 to 23, **characterized in that** at least one bevel friction wheel (2,3) comprises a self-aligning roller bearing.

25. The bevel friction ring transmission according to any one of the Claims 1 to 24, **characterized in that** at least one bevel friction wheel (2,3) comprises an axially acting bearing, which is arranged moveable in radial direction and which preferentially is arranged on a side of the bevel friction wheel (2,3) with a self-aligning roller bearing.

26. The bevel friction ring transmission according to any one of the Claims 1 to 25, **characterized in that** hydraulic means (36) are provided which are capable of loading at least one bevel friction wheel (2,3) with an axially directed force preferentially pointing from the truncated cone to the tip of the cone.

## Revendications

1. Transmission avec éléments coniques et anneau de friction comportant au moins deux engrenages de friction coniques (2,3) disposés en étant opposés l'un par rapport à l'autre sur des axes parallèles et un dispositif de friction (4) reliant opérationnellement les deux engrenages de friction coniques (2,3), dans laquelle un couple de rotation ayant un composant, qui est perpendiculaire à un plan situé à travers les deux axes de friction coniques, agit sur le dispositif de friction (4), **caractérisé en ce que** le dispositif de friction (4) est guidé au moyen d'un chariot (50) déplaçable le long d'au moins une barre de guidage (51), moyennant quoi le chariot (50) est guidé par une coulisse à degré sphérique (54) sur la barre de guidage (51).

2. Transmission avec éléments coniques et anneau de friction selon la revendication 1, **caractérisée en ce que** le couple de rotation est déterminé par les forces appliquées par les engrenages de friction coniques (2,3) sur le dispositif de friction (4).

3. Transmission avec éléments coniques et anneau de friction selon la revendication 1 ou 2, **caractérisée en ce que** le dispositif de friction (4) est disposé entre les engrenages de friction coniques (2,3) et présente une première zone de roulement (41,42), qui roule sur un premier des deux engrenages de friction coniques (2,3), et une deuxième zone de roulement (41,42), qui roule sur le deuxième des deux engrenages de friction coniques (2,3), moyennant quoi les deux zones de roulement (41,42) sont disposées en décalage par rapport à un plan de rotation (6) du dispositif de friction (4).

4. Transmission avec éléments coniques et anneau de friction selon la revendication 3, **caractérisée en ce que** le dispositif de friction (4) comprend un anneau de friction, qui comprend au moins une surface de roulement (42) disposée radialement à l'extérieur et une surface de roulement (41) disposée radialement à l'intérieur, moyennant quoi les deux surfaces de roulement (41,42) sont disposées en décalage par rapport à un plan annulaire (6).

5. Transmission avec éléments coniques et anneau de friction selon une des revendications 1 à 4, **caractérisée en ce que** le dispositif de friction (4) est guidé dans une coulisse (5), qui comprend un palier lisse (48) entre le dispositif de friction (4) et la coulisse (5).

6. Transmission avec éléments coniques et anneau de friction selon une des revendications 1 à 5, **caractérisée en ce que** le dispositif de friction (4) est guidé au moins sur trois emplacements de guidage.

7. Transmission avec éléments coniques et anneau de friction selon une des revendications 1 à 6, **caractérisé en ce que** la barre de guidage (51) est profilée de préférence en forme de 1 ou en forme carrée.

8. Transmission avec éléments coniques et anneau de friction selon une des revendications 1 à 7, **caractérisée en ce que** la barre de guidage (51) est fixée sur une armature réglable (52) en tôle, aluminium moulé sous pression ou plastique.

9. Transmission avec éléments coniques et anneau de friction selon la revendication 8, **caractérisée en ce que** l'armature réglable (52) est commandée par un moteur linéaire (56").

10. Transmission avec éléments coniques et anneau de friction selon la revendication 8, **caractérisée en ce que** l'armature réglable (52) est commandée par un moteur rotatif (56').

11. Transmission avec éléments coniques et anneau de friction selon une des revendications 1 à 10, **caractérisée en ce que** au moins un des deux engrenages de friction coniques (2,3) est disposé sur un arbre (20,30), qui est en contact avec l'engrenage de friction conique (2,3) par l'intermédiaire d'une zone de contact essentiellement traversante.

12. Transmission avec éléments coniques et anneau de friction selon une des revendications 1 à 11, **caractérisée en ce que** les deux engrenages de friction coniques (2,3) présentent un bout d'arbre, respectivement un tourillon configurés en un seul bloc avec ceux-ci.

13. Transmission avec éléments coniques et anneau de friction selon la revendication 1 à 12, **caractérisée en ce que** l'engrenage de friction conique (2,3) a une configuration massive.

14. Transmission avec éléments coniques et anneau de friction selon une des revendications 1 à 13, **caractérisée en ce que** au moins un engrenage de friction conique (2,3) est façonné en acier.

15. Transmission avec éléments coniques et anneau de friction selon une des revendications 1 à 14, **caractérisée en ce que** le dispositif de friction (4) présente une surface céramique.

16. Transmission avec éléments coniques et anneau de friction selon la revendication 15, **caractérisée en ce que** le dispositif de friction (4) comprend un anneau de friction fabriqué dans une céramique.

17. Transmission avec éléments coniques et anneau de friction selon une des revendications 1 à 16, **caractérisée en ce que**, dans un espace entourant les engrenages de friction coniques (2,3), un fluide de traction comportant de la poudre de diamant ou d'autres particules solides est prévu.

18. Transmission avec éléments coniques et anneau de friction selon une des revendications 1 à 17, **caractérisé en ce que** les paliers (22,23,32,33) des engrenages de friction coniques (2,3) sont isolés de manière étanche contre un espace entourant les engrenages de friction coniques (2,3).

19. Transmission avec éléments coniques et anneau de friction selon la revendication 18, **caractérisé en ce que** des paliers (22,23,32,33) prévus sur un côté de l'espace d'engrenage de friction conique sont disposés dans des espaces de palier reliés les uns aux autres.

20. Transmission avec éléments coniques et anneau de friction selon la revendication 18 ou 19, **caractérisée en ce que** deux paliers (22,23,32,33) prévus sur des côtés différents de l'espace d'engrenage de friction conique sont disposés dans des espaces de palier reliés les uns aux autres.

21. Transmission avec éléments coniques et anneau de friction selon une des revendications 1 à 20, **caractérisée par** au moins un roulement à rouleaux coniques.

22. Transmission avec éléments coniques et anneau de friction selon la revendication 21, **caractérisée en ce que** le roulement à rouleaux coniques est isolé de manière étanche en allant vers le tronc de cône et un espace collecteur (35) est prévu entre l'isolation étanche et les rouleaux coniques, duquel part au moins une conduite de transport de lubrifiant.

23. Transmission avec éléments coniques et anneau de friction selon la revendication 21 ou 22, **caractérisée en ce que** un réservoir de lubrifiant (34) est prévu en allant vers la pointe de cône du roulement à rouleaux coniques.

24. Transmission avec éléments coniques et anneau de friction selon une des revendications 1 à 23, **caractérisée en ce que** au moins un engrenage de friction conique (2,3) présente un roulement à rotule sur rouleaux.

25. Transmission avec éléments coniques et anneau de friction selon une des revendications 1 à 24, **caractérisée en ce que** au moins un engrenage de friction conique (2,3) présente un palier agissant axialement, lequel est disposé de manière déplaçable dans la direction radiale et est disposé de préférence sur un côté de l'engrenage de friction conique (2,3) avec un roulement à rotule sur rouleaux.

26. Transmission avec éléments coniques et anneau de friction selon une des revendications 1 à 25, **caractérisée en ce que** des moyens hydrauliques (36) sont prévus, qui peuvent solliciter au moins un engrenage de friction conique (2,3) avec une force axiale, s'exerçant de préférence du tronc de cône vers la pointe de cône.
